# EUROPEAN PATENT SPECIFICATION

(11) **EP 2 866 590 B1**
(45) Date of publication and mention of the grant of the patent: **06.04.2016**
(21) Application number: 13730251.9
(22) Date of filing: 20.06.2013
(51) Int. Cl.: A23L 23/00, A23L 23/10, A23L 27/60, A23L 29/231

(54) **CONCENTRATE FOOD COMPOSITION COMPRISING ACID PECTIN GEL**
LEBENSMITTELKONZENTRAT ENTHALTEND EIN SAURES PEKTINGEL
CONCENTRÉ ALIMENTAIRE GÉLIFIÉ CONTENANT UN GEL ACIDE DE LA PECTINE

(30) Priority: 02.07.2012 EP 12174652
(43) Date of publication of application: 06.05.2015
(73) Proprietor: Unilever N.V., 3013 AL Rotterdam (NL); Unilever PLC, London, Greater London EC4Y 0DY (GB)
(72) Inventor: SILVA PAES, Sabrina, NL-3133 AT Vlaardingen (NL); SCHUMM, Stephan Georg, NL-3133 AT Vlaardingen (NL)
(74) Representative: Tjon, Hon Kong Guno
(86) International application number: PCT/EP2013/062895
(87) International publication number: WO 2014/005853

(56) References cited:
- EP-A1- 2 468 110
- EP-A2- 0 758 531
- SANG-HO YOO ET AL: "Monovalent Salt-Induced Gelation of Enzymatically Deesterified Pectin", JOURNAL OF AGRICULTURAL AND FOOD CHEMISTRY, vol. 51, no. 25, 1 December 2003 (2003-12-01), pages 7410-7417, XP055038900, ISSN: 0021-8561, DOI: 10.1021/jf030152o
- LOOTENS D ET AL: "Influence of pH, Ca concentration, temperature and amidation on the gelation of low methoxyl pectin", FOOD HYDROCOLLOIDS, ELSEVIER BV, NL, vol. 17, no. 3, 1 January 2003 (2003-01-01), pages 237-244, XP002562210, ISSN: 0268-005X, DOI: 10.1016/S0268-005X(02)00056-5 [retrieved on 2003-03-13]
- R. XIONG ET AL: "Modelling the pH of mayonnaise by the ratio of egg to vinegar", FOOD CONTROL, vol. 11, no. 1, 1 February 2000 (2000-02-01), pages 49-56, XP055038071, ISSN: 0956-7135, DOI: 10.1016/S0956-7135(99)00064-X

## Description

The present invention relates to a concentrate food composition. It further relates to a process to prepare the same. It further relates to the use said food composition for preparing a bouillon, soup, sauce, gravy or seasoned dish.

### Background of the invention

High-salt concentrate food compositions which after dilution in water or a dish result in a bouillon, a soup, a sauce or a gravy or a seasoned dish have been described. This class of products is known to the consumer as well as to the skilled person for many decades. They are known for example in the form of dry bouillon cubes or soup cubes or seasoning cubes. Concentrated products can be dry (e.g. dehydrated), liquid, semi-liquid or paste-like products which, after the addition to water according to the directions for use, yield ready to eat preparations.

Recently, savoury concentrate food compositions became available which are in the form of a semi-solid gel. Compared to traditional dry concentrates like bouillon cubes, these gelled concentrates can contain more water and are considered to have a more fresh appearance, while still having the required high-salt level, e.g. to allow high dilution ratios while maintaining a desired taste impact. Compared to liquid concentrates, the gelled concentrates show the advantage that they are semi-solid, and sufficiently firm (also referred to in the art as self-sustaining, shape stable, soft-solid or semi-solid), and non-sticky and therefore can be unit dosed, like a traditional bouillon cube.

Gelled savoury concentrates rely for their firm, semi-solid, gelled texture on the presence of a gelling agent. A gelling agent can comprise one or more gelling and/or thickening agents which together provide the firm semi-solid gel texture. For the application in high-salt food concentrates, the gelling agent should be compatible with high-salt levels. Most gelling agents that can form a semi-solid gel in food products which are ready to eat (low-salt levels), appeared not compatible with very high-salt levels, such as common in savoury food concentrates. At these high-salt levels many gelling agents appeared to behave very different than they do at low-salt levels. In a high-salt environment they might lose their texturing ability, or often do not form a gel at all, or show other significant disadvantages which make production of savoury high-salt gels at industrial scale far from attractive, if not impossible.

WO2007/068484 describes a gelled savoury concentrate comprising a gelling agent which contains a mixture of xanthan gum and locust bean gum. EP2468110 describes a food composition comprising low-methoxy pectin. WO2012/062919 discloses a composition in the form of a gel comprising iota-carrageenan and xanthan. Despite the development of gelled concentrate food compositions which could be produced with the required high-salt level, it was experienced that these savoury concentrate food compositions show several disadvantages.

The dissolution or dispersion of the known high-salt food concentrates in water or through a dish may often take several minutes. Especially for instant products, which are often consumed immediately, or for stir-fry products wherein the cooking time is reduced to a minimum, a rapid dissolution and dispersion through the dish is of high importance. A rapid dissolution is also desired in more traditional applications, like bouillons, soups, gravies or sauces.

Certain gelling agents like pectin and carrageenan are inherently sensitive to the presence of divalent cations like Calcium or Magnesium. The concentration of these ions is difficult to control in the product due to their presence in standard ingredients like tap water or savoury ingredients, which make the formulation of savoury jellies more cumbersome.

Furthermore fortification with divalent cations, for example calcium or magnesium is sometimes desired, which strongly affects the dispersion and/or dissolution behaviour of many gelled concentrate food compositions. Therefore, a further disadvantage of several gelled concentrate food compositions described in the art is that fortification of these systems can give complications during production process and in formulation flexibility.

A further disadvantage that was observed with many, if not all, of the gelled concentrate food compositions as currently available, is the phenomenon that when the concentrate composition is diluted, for example to make a bouillon, a soup or a seasoned dish, this diluted composition shows an undesired considerable increase in viscosity (or even gels) when it stands for a while and gradually cools down to temperatures such as 50 or 40 °C, or lower. In a seasoned dish that has cooled down an undesired stickiness or lumping in the dish may be observed. This clearly can give a non-desired appearance that is sometimes interpreted as "artificial" by a consumer, as it does not sufficiently reflect the behaviour of a homemade bouillon, soup or meal etc.

A further disadvantage of the known concentrates in the form of a gel is that they are sometimes difficult to spoon from the packaging, at least not that easy as desired. For example, the gel structure does not sufficiently break because it may be too elastic and is not sufficiently brittle. This obviously does not reflect the situation of "natural", easy-spoonable gels that may result from solidified home-made bouillons, soups or gravy products. For unit dosing packagings, intended for single usage, this problem is less eminent than for packagings designed for multi-dosing. Nevertheless, consumers may prefer to use only half of a concentrate food composition, prepared for single dosing, and then scoop out the desired amount from the packaging.

### Summary of the invention

Therefore, there is a need for a food concentrate in the form of a gel, which food concentrate comprises a high salt level, to allow high dilution rates while maintaining the taste impact and which food concentrate dissolves relatively rapid in hot water or a hot dish, preferably the dispersion is practically instant, for example preferably 25 gram of the food concentrate disperses in 1L of water of 95°C within 1 minute. An additional aim of the invention is to provide such a concentrate food compositions wherein the increase in viscosity upon cooling of the diluted concentrate food composition is very low, preferably is negligible. An additional aim of the invention is to provide such a concentrate food composition which allows for fortification with divalent cations and which provides flexibility in the production process and in the ingredient formulation of the concentrate food concentrate. Further it is desired that the spoonability of the concentrate food composition is relatively easy and natural. A further aim of the present invention was to provide a process to produce such a food composition which is stable at high salt levels and which is in the form of a semi-solid gel at room temperature and solves the mentioned problems.

Surprisingly, these aims were met by a packaged food concentrate in the form of a gel, comprising:
- water
- sodium salt and optionally potassium salt in a total amount of from 5 wt% to 40 wt%, based on the total water content, wherein the amount of salt is to be calculated as (weight of salt/(weight of salt+weight of total water)) *100%,
- Gelling pectin, being all pectin with a degree of esterification of below 55, wherein gelling pectin is dissolved in the water,
wherein the pH of the food concentrate is lower than 3.5.

In a further aspect, the invention relates to a process to prepare a packaged food concentrate in the form of a gel according to the invention, the process comprising the steps of
a. Providing a mixture comprising water and gelling pectin, being pectin with a degree of esterification of below 55, wherein gelling pectin is dissolvable in water,
b. Heating the mixture,
c. Adding sodium salt,
d. Adjusting the pH of the mixture to a pH of below 3.5, if necessary,
e. Transferring the mixture to a packaging,
f. Allowing the mixture to solidify,
to result in a packaged food concentrate in the form of a gel.

In a further aspect, the present invention relates to the use of the concentrate food composition according to the invention to prepare a bouillon, a soup, sauce, a gravy or a seasoned dish.

### Detailed description of the invention

### Food composition

The food concentrate of the present invention is in the form of a semi-solid gel. Preferably, the gel is a self-sustaining gel. It is not a paste. A semi-solid gel is known to the person skilled in the art of gelled bouillon concentrates. This is referred to in the field as unit dosing, an advantage shared with traditional, dry bouillon cubes. A semi-solid gel texture allows the consumer of the food composition to remove the food composition from its packaging easily and in one piece. A semi-solid gel may allow making easy scoops for example with a spoon, which may be preferred for multi-dosage packagings. The semi-solid, preferably self-sustaining, gel texture is present at least at room temperature (20°C). The semi-solid gel texture prevents that the food composition flows apart, like a liquid or a paste, after or during removal from its packaging and allows it to maintain the shape, which at least to a certain extent reflects the shape the product had when present in its packaging, in this way allowing the desired unit-dosing. The gel texture is preferably not sticky such as a paste (for example tomato paste). The gel is preferably not very elastic, to allow easy scooping with for example a spoon. In the context of the present invention at least one of the challenges was to obtain the desired gel texture in a high-salt environment.

The food concentrate of the invention preferably shows a rheology wherein the elastic modulus (G') is higher than the viscous modulus (G"). The ratio elastic modulus (G') to viscous modulus (G") is preferably higher than 1, more preferably higher than 3, most preferably higher than 5 Pa. The elastic modulus (G') is preferably higher than 5 Pa, more preferably higher than 10 Pa, even more preferably higher than 20 Pa, most preferably higher than 30 Pa. The elastic modulus (G') is preferably lower than 9000 Pa, more preferably lower than 5000 Pa, even more preferably lower than 3000 Pa, even more preferably lower than 2000 Pa, most preferably lower than 1000 Pa. In combination with these G' values, the viscous modulus (G") is preferably higher than 1, more preferably higher than 3 Pa, even more preferably higher than 5 Pa, most preferably higher than 10 Pa. The viscous modulus (G") is preferably lower than 1000 Pa, more preferably lower than 500 Pa, even more preferably lower than 300 Pa, even more preferably lower than 200 Pa, most preferably lower than 100 Pa . Elastic and viscous moduli are terms known in the art of rheology. They have been described for example in "Das Rheologie Handbuch, Thomas Mezger, Curt R. Vincentz-Verlag, Hannover, 2000".

The protocol for measuring the elastic and viscous modulus is as following:
- A state of the art rheometer such as the AR G2 (TA Instruments, New Castle, Delaware, USA) or Physica MCR 300 (Anton Paar GmbH, Graz, Austria) are suitable for this measurement;
- Parallel plates geometry, preferred plates with sandblasted surface
- Profile: Temperature sweep followed by time sweep test:
   a. Load the sample at 90-95 °C
   b. Cool from loading temperature to 20 °C at a rate of 5°C/min while measuring the Elastic modulus (G') and Viscous Modulus (G") at a strain of within the linear viscoselastic region (e.g. 0.5% strain, pre-determined by a strain sweep test) and a frequency of 1 Hz
   c. Keep at 20°C for 10 minutes while measuring G' and G" at the same strain and frequency conditions as during the cooling step b) (time sweep step);
- Elastic modulus (G') and Viscous Modulus (G") should be taken as the plateau values after 10 min at 20 °C (step c). If plateau values for G' and G" are not reached, allow more time for step c (for example, 20 min)

The gel texture can also, for example, be analysed by a texture analyser, as known in the art. The texture can be characterised for example using common techniques such as texture analysis of penetration or compression, as measured in with equipments such as a Texture Analyser (e.g. from Stable Microsystems™) or a Universal testing machine (e.g. from Instron™).

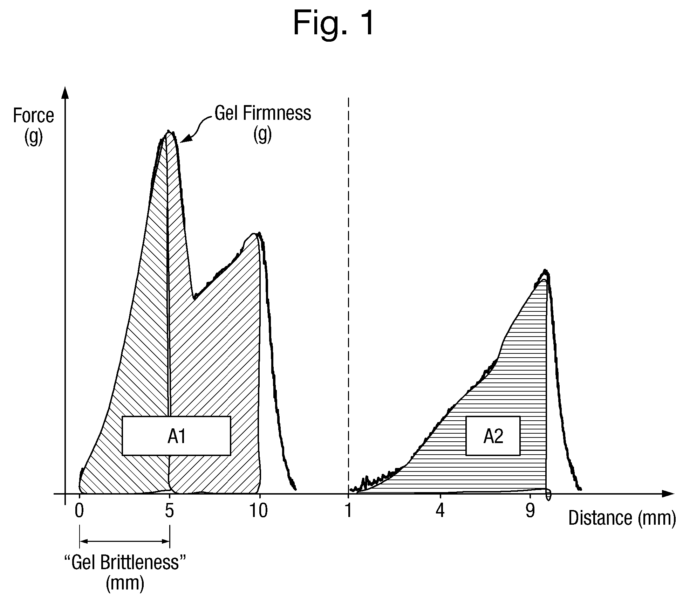

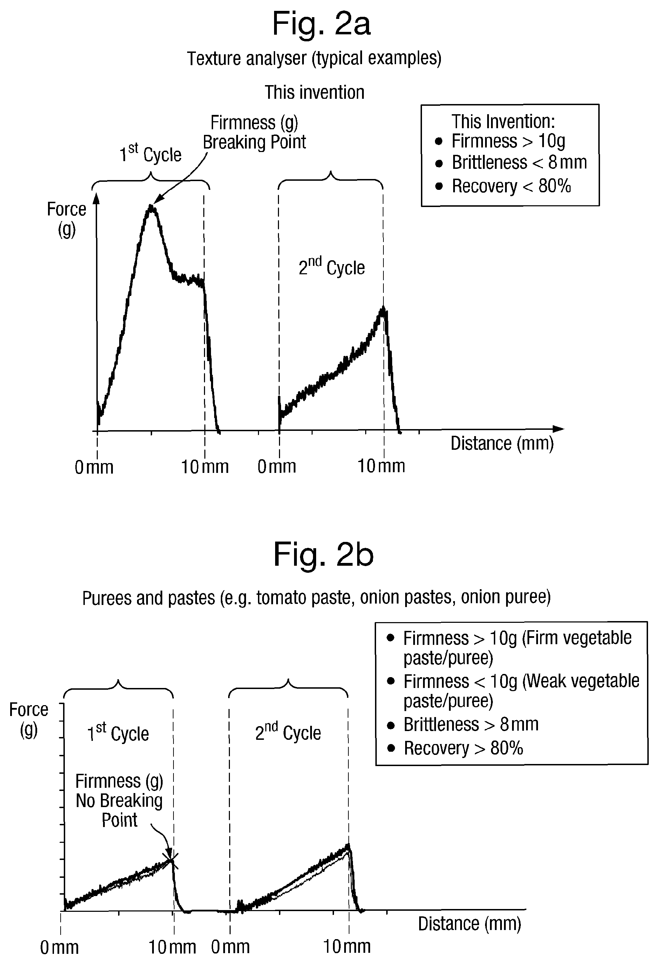

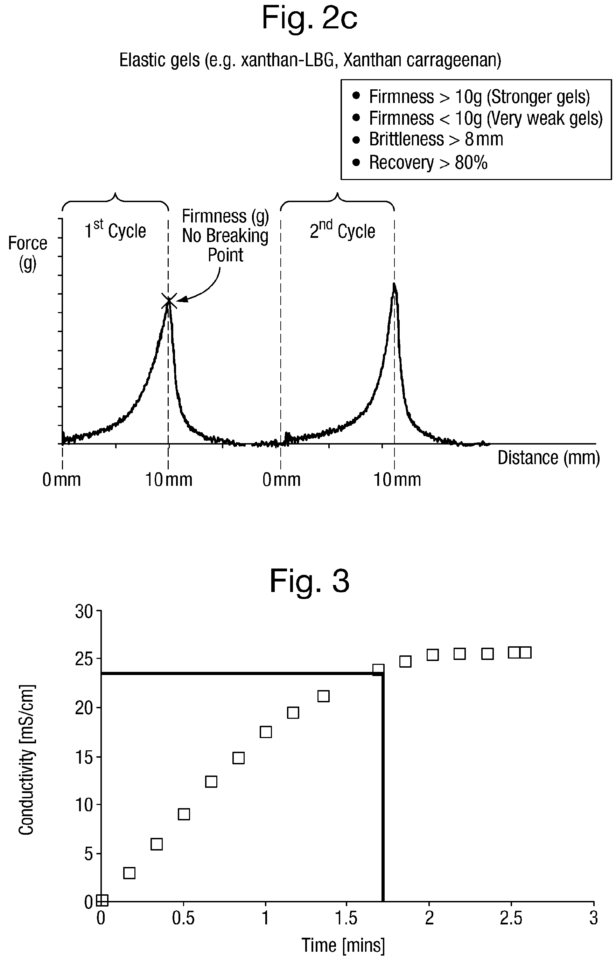

In a "penetration test", a plunger is forced into a composition and the force required for penetration of the composition is plotted against the distance (or time) of penetration into the composition at a pre-determined speed to a pre-determined depth of penetration. The plunger is then withdrawn. In the test used in the context of this invention a penetration test with two consecutive penetrations was used. If a composition is in the form of a (brittle) semi-solid gel (as preferred in this invention) it typically shows a breaking point (or irreversible deformation, e.g. yield) in the first penetration, and the maximum force is reached, indicating the "product firmness". If a composition is in the form of a paste or a very elastic gel, the product firmness (maximum force) is commonly observed at the maximum distance (depth) of penetration. The area under the force *versus* distance curve of the first penetration defines the area in the graph A1 of Figure 1. The plunger is forced into the composition for a second time, and again the force is plotted against the distance (or time). This part of the graph defines area A2. A typical force *versus* distance curve resulting from this penetration test on a semi-solid gel according to the invention has been indicated in Figure 2a and compared to test curves representing purees or pastes (e.g. vegetable purees and pastes) (Figure 2b) and elastic gels which are known in the prior art (e.g. xanthan-locust bean gum gel compositions) (Figure 2c).

For this invention, the following set up is used to characterise the gel texture:

### Test type: Penetration test with 2 cycles:

a. The_measurements are performed after at least 12h maturation time after the samples are prepared and gelled (solidified). A longer maturation time of for example 24h to 48h is preferred.
b. The samples are equilibrated to room temperature for at least 2h, prior to measurement.
c. The machine and sample container specifications are as follows:
   - Container (125 ml propylene cup), 52 millimeters diameter
   - Sample height: at least 25 millimeters
   - Equipment: Texture Analyser Stable Microsystems (or similar)
   - Probe: 1/2 inch cylinder, smooth edges (P/0.5 - 0.5 inch diameter cylinder probe, Delrin)
   - Test set up (adapted from application notes REF: GL3/P05R, stable micro systems, Revised: March 2006). The following settings are used:
      - Load cell: 30kg
      - Compression mode, 2 cycles
      - Pre-test speed =10 millimeters/second
      - Test speed =5 millimeters/second
      - Post-test speed=10 millimeters/second
      - Trigger force = 3g
      - Penetration depth=10 millimeters (measurement error can be typically of 0.1-0.2 mm).
d. Values of parameters below are presented as average and with a standard deviation of at least duplicates.

The following relevant parameters are used to characterise the gels according to this invention and are measured using a penetration test with 2 cycles with a texture analyser according to the method as described above:

Firmness: The composition of the invention is not liquid, but has a semi-solid texture with certain firmness. The firmness is determined as the maximum force (or breaking point) in the penetration first cycle (expressed in g). For a semi-solid gel as in this invention, the maximum force (firmness) is typically observed as a breaking point before complete penetration depth (distance is less than the penetration depth, which is 10mm). In the composition of the present invention, the firmness (in g) is preferably higher than 10 g, more preferably higher than 15 g, even more preferably higher than 20 g, most preferably higher than 30 g. The firmness is preferably less than 1000 g, more preferably less than 700 g, even more preferably less than 500 g.

Brittleness: Gels of the invention are preferably brittle gels. It is preferred that the gels have a certain brittleness so they are easier to spoon and easy to disperse in the application. Brittleness is defined, for the purpose of this invention, as the distance of penetration until the maximum force is achieved (in millimeters) in the first penetration. For a semi-solid gel as in the present invention (i.e. brittle gels), that is typically observed at a breaking point, at a distance (in millimeters) less than the penetration depth defined (10 mm). This is illustrated in Figure 2a. Contrary to a semi-solid gel, a paste may be too sticky and is not brittle, it does not break. This is illustrated in Figure 2b. An elastic gel might also not break within the penetration depth imposed in the test (10mm). This is illustrated in Figure 2c. The gel of the invention is preferably not an elastic gel.

In the composition of the present invention the brittleness is preferably less than 9 millimeters, more preferably less than 8 millimeters, even more preferably less than 7 millimeters.

Recovery: The recovery of the composition is expressed as the ratio A2/A1: The ratio between A2/A1 is considered as a measure for the cohesiveness of the composition, i.e. is a measure of how well the product withstands a second deformation relative to how it behaved under the first deformation. The recovery is preferably less than 80%, more preferably less than 70%, even more preferably less than 60%. In general, semi-solid (brittle) gels as in this invention show a lower recovery value than very elastic gels, liquids, purees and pastes, as they break in the first cycle (i.e. breaking point or yield is observed in the first cycle at a distance below 10 mm).

### Water

The food concentrate according to the invention comprises water. Water is preferably present in a total amount of from 35 to 93 wt%. More preferably water is present in an amount of from 40 to 80 wt%, more preferably of from 45 wt% to 75 wt%. Water is representing here the total water content of the food composition.

The water activity of the product is preferably of between 0.60 and 0.95, more preferably of between 0.65 and 0.90 even more preferably between 0.70 and 0.90, most preferably between 0.75 and 0.85.

### Salt

The food concentrate according to the present invention is a concentrate product that can be used as to prepare for example a bouillon, a soup or a seasoned dish. Generally, such a product is diluted, for example in water, or in a dish, for example in a liquid dish or a in sauce or in a vegetable dish or a rice dish, to obtain a food product which is ready for consumption. Inherently, the concentrate food composition according to the invention comprises a high salt content, to allow the conventional relatively high dilution factors, while maintaining a proper taste impact. To this end, the food concentrate according to the invention preferably comprises sodium salt (preferably NaCl) and optionally potassium salt (preferably KCl) in a total amount of from 5 wt% to 40 wt%, more preferably of from 7 wt% to 35 wt%, even more preferably of from 10 wt% to 35 wt%, even more preferably of from 15 wt% to 30 wt%, most preferably of from 20 to 26 wt%, based on the total water content of the concentrate food composition. The amount of salt is calculated as standard in the art, and is according to the following formula: ((weight of salt) / (weight of salt + weight of total water content)) *100%.

For example 5 g salt in 20 g total water content results in an amount of salt of 20 wt% on total water content. When preparing the concentrate food composition of the invention, this amount of salt can be added during preparation. The same formula is used, mutatis mutandis for calculating other ingredients the amount of which is described as based on the total water content, such as for example gelling pectin.
Sodium salt, preferably NaCl, is preferably present in an amount of from 5 wt% to 40 wt%, preferably of from 7 wt% to 35 wt%, even more preferably of from 10 to 35 wt%, even more preferably of from 15 to 30 wt%, most preferably of from 20 to 26 wt%.

It might be preferred that in addition to sodium salt, preferably NaCl, the food concentrate comprises a potassium salt (preferably KCl). The presence of potassium ions in combination with sodium ions, preferably at specific ratios in the composition results in firmer gels compared to the situation when only Na⁺ cations or K⁺ cations are present. This is even the more surprising, since general knowledge suggests a reduction in gel strength at extreme salt levels (higher than 5 %wt based on the total water content), for both Na⁺ and K⁺ cations.

To this end, especially when potassium salt is present in the composition, sodium salt, preferably NaCl, is preferably present in an amount of from 4 to 35 wt%, more preferably of from 4.5 to 30 wt%, even more preferably of from 5 to 25 wt%, most preferably of from 7 to 23wt%, based on the total water content.

The ratio of Na⁺ cations to the total amount of Na⁺ cations and K⁺ cations taken together, i.e. the ratio [Na⁺cations/(Na⁺ cations + K⁺ cations)], or for simplicity, (Na⁺/(Na⁺+K⁺))*100 (expressed in %) in the concentrate food composition according the invention is preferably of from 15 wt% to 95 wt%, more preferably from 35 wt% to 93 wt%, more preferably of from 40 wt% to 92 wt %, even more preferably of from 45 wt% to 90 wt %, most preferably from 50 wt% to 85 wt%. These ratios resulted in most significant effects on gel formation and advantages indicated above.

The food concentrate preferably comprises potassium salt. Most preferably, the potassium salt comprises KCl. KCl is preferably present in an amount of from 0.6 to 20 wt%, more preferably of from 0.8 wt% to 19 wt%, even more preferably of from 1 wt% to 17 wt%, most preferably of from 1.5 wt% to 15 wt%, based on the total water content of the composition.
These amounts are preferably present to result in a ratio of [(Na⁺/(Na⁺+K⁺))*100] of from 15 wt% to 95 wt% in the final food concentrate composition.

Na⁺ cations are preferably present in an amount of from 1.5 wt% to 15 wt%, more preferably in an amount of from 1.7 wt% to 12 wt%, even more preferably in an amount of from 2 wt% to 11 wt%, most preferably from 2.5 wt% to 10 wt% based on the total water content of the food concentrate composition.

K⁺ cations are preferably present in an amount of from 0.3 wt% to 13 wt%, more preferably in an amount of from 0.4 wt% to 10 wt%, even more preferably in an amount of from 0.5 wt% to 9 wt%, most preferably from 0.8 wt% to 8 wt% based on the total water content of the food concentrate composition.

### Gelling pectin

According to the invention, the food concentrate comprises gelling pectin. Pectin is a substance which is present in the cell wall of plants. Pectin is used as a thickening and gelling agent, and is known in the food industry to provide structure in fruit and vegetable compositions.

Pectic substances are complex heteropolymers originating from plant tissue. Pectin consist predominantly of α-D galacturonic acid units, but also contains some amount of neutral sugars such as rhamnose, xylose, arabinose, galactose and gulose. For the purpose of this invention "pectin" is expressed as "galacturonic acid", and accordingly, we define the "pectin content" in a food formulation as the weight percentage of galacturonic acid (GalA) based on the total water content of the composition. The pectin content can be determined by methods known in the art, such as for example the Saeman hydrolysis method (Englyst and Cummings (Analyst, 109(7), 937-942 (1984), Filisetti-Cozzi and Carpita (Analytical Biochemistry, 197, 157-162 (1991)).

The carboxyl groups at the sixth carbon of each galacturonic acid unit may be esterified by a methyl group or may exist as unesterified free carboxyl group. The percentage of esterified galacturonic acid units relative to the total number of galacturonic acid units in a pectin polymer is called the degree of esterification (DE). The degree of esterification can be determined according to methods known in the art, such as the base titration method (Shultz, 1965) as proposed by the Food Chemical Codex (FCC (1981). 3rd ed., (1981) National Academy of Science, Washington, DC), quantification of methanol released during de-esterification using gas chromatography (GC) (Walter et al. (1983), Journal of Food Science, 48: 1006-10070), colorimetry (Hou et al. (1999), Botanical Bulletin of Academia Sincia, 40:115-119), high performance liquid chromatography (HPLC) (Levigne S., et al. (2002), Food Hydrocolloids 16: 547-550), nuclear magnetic resonance (NMR) (Rosenbohm et al. (2003) Carbohydrate Research, 338: 637-649) and capillary zone electrophoresis (CZE) (Williams et al. (2003), Journal of Agricultural Food and Chemistry, 51: 1777-1781).

The DE resulting from such a determination is usually expressed as an average degree of esterification to account for the differences in DE of the individual polymers in a formulation. The average degree of esterification (DE) is often used to classify pectin according to physical characteristics like the ability to form gels in the presence of divalent cations like calcium. In this context the term "Low methoxyl pectin" is often used for pectins with a low degree of esterification that can be induced to form gels in the presence of calcium, while the term "High methoxyl pectin" describes pectins that don't gel in the presence of calcium due to their high content of methoxyl ester groups.

Compositions of the current invention may contain plant material such as for example fruit or vegetable pieces and purees, which are a source of pectin present in the formulation. This pectin may have a variety of different average DE, potentially leading to a broad and heterogeneous DE distribution which makes the use of an average DE to characterise the pectin in the invention unpractical. It was found, that in the context of the present invention, i.e. in high-salt food concentrates, it is the pectin with a DE of lower than 55 % that contributes to the desired texture of a semi-solid gel. Therefore, for the purpose of this invention we define as "gelling pectin" all pectin with a DE below 55%. Preferably the DE is of below 50% even more preferably below 45%, most preferably the DE is below 40%. A method to separate pectin into fractions with different DE is described, for example, by Strom, et al. (2005), Carbohydrate Polymers, Volume 60, Issue 4, 20 June 2005, Pages 467-473.

Gelling pectin is present in an effective amount, i.e. to provide a food concentrate in the form of a semi-solid gel. As conceivable for the skilled person, to provide the texture according to the invention, the gelling pectin is dissolved gelling pectin, i.e. dissolved in the water of the food composition of the invention. Preferably, the amount of gelling pectin, dissolved in the water of the food concentrate composition, is of between 0.7 wt% and 10 wt%, more preferably of between 0.9 wt% and 6 wt%, even more preferably between 1.0 wt% and 5 wt%, even more preferably between 1.1 wt% and 4 wt%, most preferably between 1.2 wt% and 3 wt%, based on the total water content. This amount is to be calculated as common in the art, according to the following formula ((weight of galacturonic acid)/(weight of galacturonic acid + weight of total water content)) x 100%. As indicated, the DE of the gelling pectin is lower than 55%. Preferably, the DE of the gelling pectin is lower than 50%, preferably of lower than 45%, more preferably of lower than 40%, most preferably the DE is lower than 30%.

It was found that relatively high salt levels are preferably combined with relatively high pectin levels, for optimal stability during storage and transport. For a sodium salt content of higher than 20 wt% on total water content, the amount of gelling pectin, with a DE below 55% as defined above, is preferably of between 1.3 wt% and 10 wt%, more preferably of between 1.4 wt% and 5 wt%, even more preferably between 1.5 wt% and 4 wt%, most preferably between 1.5 wt% and 3.5 wt%, expressed as galacturonic acid content based on the total water content of the food concentrate.

For a sodium salt content of higher than 10 wt% on total water content, the amount of gelling pectin, with a DE below 55% as defined above, is preferably of between 0.8 wt% and 10 wt%, more preferably of between 0.9 wt% and 5 wt%, even more preferably between 1.0 wt% and 4 wt%, most preferably between 1.2 wt% and 3 wt%, expressed as galacturonic acid content based on the total water content of the food concentrate.

### Other ingredients

### Savoury taste enhancer

To contribute to the savoury character, the concentrate food composition of the present invention may further comprise a savoury taste enhancer selected from the group consisting of monosodium glutamate (MSG), 5'-ribonucleotides, organic acid and mixtures thereof. Savoury taste enhancer is preferably present in a total amount of less than 30 wt%, more preferably of between 0.1 wt% and 30 wt%, preferably in an amount of from 1wt% to 25 wt%, most preferably in an amount of from 5wt% to 15 wt%, based on the weight of the total food concentrate. An individual taste enhancer as mentioned above may be present in an amount of less than 30 wt%, more preferably of between 0.1 wt% and 30 wt%, preferably in an amount of from 1 wt% to 25 wt%, most preferably in an amount of from 5 wt% to15 wt%, based on the weight of the total food concentrate.

### Taste imparting components

In the concentrates according to the invention, it is preferred that taste-imparting components are present. They may comprise one or more of yeast extract; hydrolyzed proteins of vegetables-, soy-, fish-, or meat-origin, liquid or dissolvable extracts or concentrates selected from the group consisting of meat, fish, crustaceans, herbs, fruit, vegetable and mixtures thereof; particles of meat; particles of fish; particles of crustaceans; particles of plant (e.g. herbs, vegetable, fruit); particles of fungi (e.g. mushroom); flavours and mixtures thereof. In the above, where it says "meat" this is preferably to be understood to comprise beef, pork, chicken (and other fowl). Preferably the plant pieces comprise pieces selected from the group consisting of onion, garlic, leek, carrot, parsley, tomato and mixtures thereof. Preferably the amount of taste-imparting components as set out above is from 1 wt% to 70 wt% (by weight on the total concentrate). More preferred from 2 wt% to 60 wt%, even more preferably from 5wt% to 40%. It was observed that tomato material could provide a significant tomato taste and colour to the food concentrate of the invention. Therefore, it may be preferred that the amount of tomato paste or tomato particles is less than 50 wt%, more preferably less than 30 wt%, even more preferably less than 10 wt% or even less than 1 wt%., based on the weight of the food concentrate.

Preferably, the amount of particles, preferably particles selected from the group of particles of meat, particles of fish, particles of crustaceans, particles of plant (e.g. herbs, vegetable, fruit), particle of fungi (e.g. mushroom) and mixtures thereof is from 0.5 wt% to 70 wt%, more preferably from 1 wt% to 60 wt%, even more preferably from 2 wt% to 40 wt% (by weight on the total concentrate). The amount of particles can be of from 0.5 to 30 wt%, more preferably of from 1 to 20 wt%, even more preferably of from 2 to 10 wt% (wet weight based on the weight of the food composition).

### Fat

Fat may be present in the food concentrate according to the present invention in relatively low amounts. Fat can be liquid fat or solid fat, at ambient temperature, such as for example at 20°C. Preferably, a fat is one of the fats selected from the group consisting of chicken fat, pork fat, beef fat, and mixtures thereof. It can preferably be a fat selected from the group consisting of palm oil, sunflower oil, olive oil, rape seed oil and mixtures thereof. It can be a vegetable fat or an animal fat. Higher amounts are preferably prevented as they may interfere with the proper texture of the gel or may result in phase separation during storage or transport. Relatively high amounts of hard fat, such as e.g. saturated or hydrogenated fats may affect the desired gel texture, and therefore are not preferred. Relatively high amounts of liquid fat, such as for example oils which are liquid at room temperature, may have a weakening effect on the texture of the gel. Hence, preferably, the present invention relates to a food concentrate further comprising less than 15 wt% of fat, preferably less than 10 wt% of fat. In another preferred aspect, fat may be present in an amount of from 0.5 to 15 wt% of fat, more preferably of from 1 to 10wt% of fat, most preferably of from 3 to 10 wt% of fat, based on the weight of the food concentrate. The amount of fat in the food concentrate is preferably as low as possible, for optimal stability. It may be preferred that fat is absent.

The concentrate food concentrate of the invention is a savoury food composition. Consequently, after dilution, the resulting product does preferably taste not sweet. The sugar content in the composition according to the invention is preferably lower than 50 wt%, more preferably lower than 40 wt%, even more preferably lower than 30 wt%, more preferably lower than 15wt%, most preferably lower and 10 wt%. It can be more than 1%, preferably more than 5 wt% based on the total weight of the concentrate. A suitable range could be of between 1 and 20 wt%, preferably of from 3 to 15 wt% based on the total weight of the concentrate. It may be preferred that the composition is free from sugar or free from any added sugar. Sugar polyols could also provide a sweet taste to the product resulting after dilution. The consumer may not appreciate the presence of these compounds. The concentration of sugar polyols, for example liquid sugar polyols, is preferably less than 1 wt%, more preferably less than 0.5 wt%, even more preferably less than 0.1 wt%, or less than 0.05 wt% based on the weight of the food concentrate. Most preferably the composition does not contain any added sugar polyol or added liquid sugar polyol.

The pH of the concentrate food composition of the invention is lower than 3.5. Preferably, the pH is lower than 3, more preferably lower than 2.8. The pH is preferably higher than 1, more preferably higher than 1.5, even more preferably higher than 2. The pH can be preferably between 1 and 3.5, more preferably between 1.5 and 3.2, even more preferably between 2 and 3. Surprisingly, this pH range resulted in a gel which showed a very quick dispersion behaviour, for example in hot water of e.g.95 °C. The savoury food concentrate could be dispersed within a minute or even within seconds. The pH of the gelled composition is the pH as measured after a period of 1 day after preparation of the concentrate gelled food composition at room temperature (e,g, 20 °C), to allow maturation and stabilisation of the pH of the gel. It is known to the skilled person how to measure the pH of a food composition in the form of a gel.

### Packaging/size:

The food concentrate according to the invention is preferably packaged. It is preferably packaged in a tub, wherein the tub preferably comprises one food composition.

The weight of the food composition is preferably of between 10 gram to 500 grams, more preferably of between 15 grams and 300 grams. It may be preferred that the weight of the food concentrate is between 10 and 50 grams, more preferably of between 15 and 30 grams. This format is in particular useful for unit dosing for family portions. It may be preferred that the food concentrate has a weight of between 50 grams and 500 grams, preferably of between 100 grams and 350 grams. This packaging may be suitable for restaurant applications.

### Process

The present invention further relates to a process to provide a packaged food concentrate according to the invention. The process comprises the steps of:
a. Providing a mixture comprising water and gelling pectin, being pectin with a degree of esterification of below 55, wherein the gelling pectin is dissolvable in water,
b. Heating the mixture,
c. Adding sodium salt,
d. Adjusting the pH of the mixture to a pH of below 3.5, if needed,
e. Transferring the mixture to a packaging,
f. Allowing the mixture to solidify,
to result in a packaged food concentrate in the form of a gel.

### Mixing pectin and water

In a first step a), a mixture is provided comprising water and gelling pectin, wherein gelling pectin is construed as pectin with a DE level of below 55. Pectin can be added as a pectin powder, which can be commercially bought, for example LM pectin LC 810 from Danisco.

### Heating

Step b) comprises heating the mixture resulting from step a) to result in a solution. Heating activates the pectin and contributes to dissolution of pectin and salts and possible other ingredients. Heating is preferably carried out up to a temperature of the mixture of between 70°C and 95°C, preferably of between 75°C and 90°C.

### Addition of sodium salt

Step c) comprises the addition of sodium salt to the mixture resulting from step a). Sodium salt, preferably NaCl, is preferably added in an amount of from 5 wt% to 40 wt%, more preferably of from 7 wt% to 35 wt%, even more preferably of from 10 wt% to 35 wt%, even more preferably of from 15 wt% to 30 wt%, most preferably of from 20 wt% to 26 wt%, based on the total water content of the resulting food composition.

In case a potassium salt, like KCl is used, it is preferably added at the moment as preferred for sodium salt. The potassium salt, preferably KCl, is preferably added in an amount of from 0.6 to 20 wt%, more preferably of from 0.8 to 20 wt%, even more preferably of from 1 to 17 wt%, most preferably of from 1.5 to 15 wt%, based on the total water content of the final concentrate food composition. Especially when potassium salt is present in the composition, sodium salt, preferably NaCl, is preferably added in an amount of from 4 to 35 wt%, more preferably of from 4.5 to 30 wt%, even more preferably of from 5 to 25 wt%, most preferably of from 7 to 23wt%, based on the total water content. The ratio of Na⁺ cations to the total amount of Na⁺ cations and K⁺ cations taken together, i.e. the ratio [Na⁺cations/(Na⁺ cations + K⁺ cations)], or for simplicity, (Na⁺/(Na⁺+K⁺))*100 (expressed in %) is preferably of from 15 wt% to 95 wt%, more preferably from 35 wt% to 93 wt%, even more preferably of from 40 wt% to 92 wt%, even more preferably of from 45 wt% to 90wt %, most preferably from 50wt% to 85 wt% in the final resulting food concentrate of the invention. The preferred amounts and ratios can be combined and preferably potassium salt, preferably KCl, is added in an amount to result in an amount of from 0.9 to 15 wt% KCl and a ratio of [(Na⁺/(Na⁺+K⁺))*100] of from 20 wt% to 95 wt% in the resulting food concentrate.

This ratio is calculated, for example as following:

| e.g. in 75 g of water | | Ratio: (Na⁺/(Na⁺+K⁺))*100 (expressed in %) |
|---|---|---|
| NaCl (g) =20 | Na⁺cations=7.9 (g) | 75% |
| KCl (g) =5 | K⁺ cations =2.6(g) | |
| | Na⁺ cations +K⁺ cations =10.5(g) | |

Sodium salt (preferably NaCl) and if present, potassium salt, can be added before, during or after the heating step b). It is preferred that NaCl and if desired potassium salt, is added after the heating step b). This resulted in optimal texture of the resulting gelled food concentrate. It is noted that salt can be present in an amount which is higher than the saturation point of the salt. In this case, salt crystals may appear e.g. at the surface of the resulting concentrate.

### Addition of other ingredients

The process may further comprise the step of adding of taste imparting components and/or adding savoury taste enhancer. This step may comprise adding vegetable pieces, fruit pieces, herb pieces, meat pieces, fungi pieces and mixtures thereof. Taste imparting components, savoury taste enhancers and fat can be added in the amounts as described above under "other ingredients". For example, the taste imparting components may be added in an amount of from 1 to 70 wt%, based on the weight of the total resulting food composition. The savoury taste enhancer may be added in an amount of from 0.1 to 30 wt%, based on the weight of the total resulting food composition.

Fat may be added in an amount of below 15%, more preferably below 10 wt%, based on the weight of the resulting concentrate food composition.

The step of addition of taste imparting components and/or savoury taste enhancer can be carried out during or after step a), and preferably before solidification step f). Preferably, this step is carried out during or after step b).

### Adjusting the pH

Step d) comprises the adjusting the pH, if necessary, of the mixture to a pH of below 3.5. The pH can be adjusted as known in the art, for example by adding acid. Adjusting the pH preferably comprises adding acid, prefereably an acid selected from the group consisting of for example HCl, phosphoric acid, citric acid, sulphuric acid, ortophosphoric acid, and mixtures thereof. The step of adjusting the pH can be carried out during or after step a). and preferably before packaging step d).

### Packaging

In step e) the mixture comprising water, gelling pectin, sodium salt and possibly taste imparting ingredients and/or savoury taste enhancer is packaged. The mixture may be in liquid form and is transferred to a packaging, such as a tub.

### Solidification

In step f), the mixture is allowed to solidify. Solidification preferably comprises gellification of the mixture. Solidification of the mixture comprising water, gelling pectin and NaCl preferably comprises cooling, preferably up to a temperature of the mixture of between 0°C and 60°C, preferably of between 5°C and 55°C, most preferably of between 10°C and 40°C. Solidification preferably takes place in the packaging, i.e. after step e).

### Use

In a further aspect, the present invention relates to the use of the concentrate food composition according to the invention to prepare a bouillon, a soup, sauce, gravy or a seasoned dish. The use according to the present invention preferably comprises diluting the concentrate food composition according to the invention, at least part of it, in an aqueous liquid, or mixing it into a dish. The aqueous liquid is preferably water, but can be a sauce, a soup, milk etc. The dish can be a vegetable dish, meat, fowl, fish etc. The temperature of the aqueous solution or dish is preferably of between 60°C and 100°C, more preferably of between 70°C and 95°C. The food composition according to the invention dissolves relatively fast in hot water (e.g. 95°C). It may be preferred that 25 gram dissolves in 500 ml of hot water within 3 minutes, preferably within 2 minutes.

The dissolving time is measured by a conductivity measurement and by visual inspection, as known by a person skilled in the art. As known in the art, in the context of this invention, dissolving is generally understood as the process wherein the semi-solid gel melts and goes into solution in a solvent, e.g. water or a liquid dish. Dissolving can be correlated with the melting properties of the semi-solid gel. Dissolving can be measured via the conductivity increase in the solvent.

In the context of the present invention we understand as dispersing the process of breaking a gel into smaller parts of a given size and distributing said particles through an aqueous liquid or dish.

To quantify the dispersing properties a Dispersion Test can be used where the mass decrease of large semi-solid gel particles over time is measured. This mass decrease is caused by breaking apart of said large semi-solid gel particles into smaller particles. The food composition according to the invention disperses relatively fast in hot water (e.g. 95°C). It may be preferred that 25 gram disperses in 1L of hot water within 2 minutes, preferably within 1 minutes.

During dispersion, (partly) dissolving of gel particles may take place as well. The change in conductivity and mass decrease to analyse relative dissolving and dispersion can be measured according to the following method:

### Dissolution test:

### Equipment:

- Heating plate with magnetic stirring
- Magnetic stirrer
- Conductivity meter
- Video camera
- Transparent glass beaker (1L)
- Metal mesh frame to hold the gel ~2 cm above the bottom of the beaker.

### Procedure:

- 500 ml of tap water is heated to boiling temperature and added to a glass beaker of 1 litre.
- A temperature probe and conductivity probe are placed in the beaker.
- A video camera is adjusted to record the dissolution time (for the visual inspection)
- Once the temperature reaches 100°C, the conductivity measurement and the visual inspection (video recording) are started.
- Approximately 25-30 g of a gel product (shape stable, self-sustaining at RT) is carefully immersed in the hot water and held in place by a meshed metal frame.
- A magnetic stirrer is placed at the bottom of the glass beaker and below the metal frame that holds the gel product. The stirring is kept at 300rpm and is immediately started after immersing the gel product to the boiling water. The temperature is kept between 95-100°C throughout the test.
- The stirrer does not get in contact with the gel food composition during the test.
- The dissolution time is determined as the time at which 90% of the plateau value for the conductivity is reached and/or by visual inspection (gel "disappearance", recorded video), see Figure 3.
- In case variations between conductivity determination and visual inspection occurs, the visual inspection value (time) is taken as the dissolution time.

### Dispersion test:

### Equipment:

- A kitchen food preparation machine (Kenwood Cooking chef major KM070 series), with temperature control (one stirring speed for temperatures above 60°C).
- Flexi beater stirrer attachment
- Sieve: 1 mm mesh
- Balance (at least ±0.1g precision)

### Procedure:

- 1L of water is added to the Kenwood chef bowl
- The temperature of the machine is set to 95-97°C.
- The gel product to be analysed is weighed (25-30g gel composition (weightt=o in g))
- When a temperature of 95-97°C is reached, mixing is stopped. The gel sample is inserted (through the plastic window), and timer and stirrer are started After a set period (see below), the product is sieved (water + gel food composition) through a 1 mm mesh sieve.
- The amount of product left in the sieve is weighed.
- Measurements are taken after a period of dispersion of, for example, 15s, 30s, 1min, 2min, 4min, 8min at least in duplicates.
- To determine the weight of any particles present_in the gel product, as a reference a dispersion time is chosen which is sufficiently long enough to essentially disperse the entire gel product. The weight of the material which is left in the sieve is not of gel particles but of other particles which were present in the original gel product, such as vegetable particles, meat pieces etc. In the case of the present Examples, a dispersion time of 10 min was sufficient to disperse the entire gel product and determine the weight of the remaining particles.

### Calculation:

- The % of gel food composition not dispersed at the set times (e.g. 15s, 30s, 1min, 2min, 4min, 8min) is calculated as follows:
   [%gel not dispersed: (weightₜ₌ₜᵢ -weight_{t=10 min}) / (weightₜ₌₀-weight_{t=10 min})*100]

### Wherein:

- weight_{t=10 min} is the weight of product left in the sieve after 10 min.
- weightₜ₌ₜᵢ is the weight of product left in the sieve at the set times of, for example, 15s, 30s, 1min, 2min, 4min, 8min
- weightₜ₌₀ is the initial weight of the product
- (weightₜ₌₀-weight_{t=10 min}) = "gel weight", i.e. product weight subtracted particles larger than 1mm mesh which are not gel particles(retained by sieve)

### For example:

- Initial product (gel food composition) weight=25g=> weightₜ₌₀
- Weight product left after 30s= 5 g (including undispersed gel and particles larger than the 1 mm mesh size) ⇒weightₜ₌₃₀ₛ
- Weight product left after 10 min: 3 g (control: particles larger than the mesh size, gel is assumed completely dispersed after 10 min for comparative purpose) ⇒weight_{t=10 min}

### [%gel not dispersed: (5-3)/(25-3)*100=9%]

### Advantages

The present invention provides a high salt concentrate food composition which was in the form of a semi-solid gel, suitable for unit dosing, and stable during storage. The resulting semi-solid gels show a remarkably fast dispersion when dispersed, e.g. in hot water or in a hot dish. In addition, the food concentrates of the invention do not show a significant increase in viscosity upon dissolving the product in hot water (e.g. 95 °C) followed by cooling. The food concentrates allow fortification with bivalent cations, without affecting the dispersion and/or dissolution behavior of the concentrate. It was further observed, that the pectin-textured concentrate food compositions of the invention did not show significant syneresis upon storage.

The present invention will now be exemplified by the following, non-limiting examples:

### EXAMPLES

### Example 1: Acid pectin gel

• Pectin powder (LC810, Danisco) was dispersed in water until completely dissolved
• The mixture was heated to approximately 90-95 °C
• NaCl was added and quickly stirred to dissolve the salts
• The pH was adjusted to ~2 with 6N HCl.
• Samples were poured into containers for subsequent measurements
• Samples were allowed to cool to room temperature

| | | % |
|---|---|---|
| Pectin | | 4.2% |
| Water | | 74.7% |
| NaCl | | 21.4% |
| Total | | 100.0% |
| | | |
| pH | | 2.12 |
| Firmness | (g) | 42±3 |
| Brittleness | (mm) | 8.4±0.1 |
| Dispersion (time) | | ≤30s |

*LC 810 (Danisco average DE typically 37, contains gelling pectin), contains ∼62% galacturonic acid (GalA).*
• 25 g of gel was dispersed in 1 L of water (95 °C), using the protocol as indicated in the description. Dispersion time was within 30s.

### Example 2: Acid pectin gels, 10% salt, using combination of salts Na⁺ and K⁺

• Pectin powder (LC810, Danisco) was dispersed in water until completely dissolved
• The pH was adjusted to ~2 with 6N HCl.
• The mixture was heated to approximately 90-95°C
• NaCl+KCl mixture were added and quickly stirred to dissolve the salts
• Samples were poured into containers
• Samples were allowed to cool to room temperature

| | Pectin Powder | Water | NaCl | KCl | Total | Firmness | Dispersion | Dissolution |
|---|---|---|---|---|---|---|---|---|
| | %wt | %wt | %wt | %wt | %wt | (g) | (% gel left after 30s) | (s) |
| 2a | 3.6% | 86.7% | 6.9% | 2.8% | 100.0% | 37±1 | 7.6±0.2 | 67±6 |
| 2b | 3.6% | 86.7% | 5.8% | 3.9% | 100.0% | 70±4 | 8.6±0.2 | 40±0 |
| 2c | 3.6% | 86.7% | 3.2% | 6.4% | 100.0% | 256±23 | 26.7+1.8 | 64±8 |

*LC 810 (Danisco average DE typically 37, contains gelling pectin), contains ∼62% galacturonic acid* (*GalA*).
• 25 g of gel was added to 0.5L (dissolution test) or 1 L (dispersion test) of water (95 °C), using the protocol as indicated in the description. The dissolution time was within 1 min. The complete dispersion was below 1 min.
• Even strong gels had a very fast dispersion (in contrast to Ca-pectin gels, high pH, see example 4).

### Example 3: Acid pectin gels, 23% salt, comprising a combination of salts Na⁺ and K⁺

• Pectin powder (LC810, Danisco) was dispersed in water until completely dissolved
• The pH was adjusted to ∼2.6 with 6N HCl.
• The mixture was heated to approximately 90-95°C
• NaCl+KCl mixture was added and quickly stirred to dissolve the salts
• Samples were poured into containers
• Samples were allowed to cool to room temperature

| | Pectin Powder | Water | NaCl | KCl | Total | Ratio | Firmness | Increase in Firmness compared to Na⁺ only gels | Increase in Firmness compared to K⁺ only gels | Dispersion |
|---|---|---|---|---|---|---|---|---|---|---|
| | %wt | %wt | %wt | %wt | %wt | (Na⁺/ (K⁺+Na⁺)) *100 (%) | (g) | % | % | (% gel left after 30s) |
| 3a | 3.1% | 74.6% | 22.3% | 0.0% | 100.0% | 100% | 17±3 | Na⁺ Only | Na⁺ Only | 6.3+0.8 |
| 3b | 3.1% | 74.6% | 15.9% | 6.4% | 100.0% | 65% | 60±5 | 253 | 324 | 18.4±5.1 |
| 3c | 3.1% | 74.6% | 7.4% | 14.9% | 100.0% | 27% | 92±2 | 437 | 115 | 11.0±4.2 |
| 3d | 3.1% | 74.6% | 0.0% | 22.3% | 100.0% | 0% | 39±1 | K⁺ only | K⁺ only | 6.4±0.0 |

*LC 810 (Danisco average DE typically 37, contains gelling pectin), contains ∼62% galacturonic acid* (*GalA*).
• 25 g of gel was dispersed in 1 L of water (95°C), using the protocol as indicated in the description. The dispersion time was within 1 min. The example indicates that the firmness of the gel was increased when a combination of Na⁺ and K⁺ cations was used, compared to the situation when only Na⁺ or K⁺ cations were present.

### Example 4: Acid pectin gels, 10% salt, comparison of acid pectin gels with Ca-pectin gels (pH>3.5)

### preparation of comparative example 4a

- Pectin powder (LC810, Danisco) was dispersed in demineralised water until completely dissolved
- The pH was adjusted to ∼4.5 with 1N NaOH.
- The mixture was heated to approximately 90-95°C
- NaCl+KCl mixture and Calcium salt were added and quickly stirred to dissolve the salts
- Samples were poured into containers
- Samples were allowed to cool to room temperature

The product of comparative Example 4a was compared to a product of this invention (4b), which is the product as described as Example 2c.

| | | **Comp. Ex. 4a Ca-Pectin (%wt)** | **Example 4b (=Ex.2c) Acid Pectin (%wt)** |
|---|---|---|---|
| Pectin | | 3.6 | 3.6 |
| Water | | 86.5 | 86.7 |
| Salt | NaCl | 3.2 | 3.2 |
| | KCl | 6.4 | 6.4 |
| Calcium (CaCl2.2H2O) | | 0.3 | Not added |
| Total | | 100 | 100 |
| | | | |
| pH | | 4.5 | 2.1 |
| Firmness | (g) | 225±23 | 256±23 |
| Dissolution (time) | sec | 316±1 | 64±8 |

*LC 810 (Danisco average DE typically 37, contains gelling pectin), contains ∼62% galacturonic acid* (*GalA*).
- Acid pectin gels with 10% salt (NaCl +KCl) dissolved 5x faster than Ca-pectin gels with comparable firmness and same salt composition (NaCl +KCl)

### Example 5: Savoury gel

### Savoury food concentrate according to the invention:

### Preparation:

a) Pectin powder (LC810, Danisco) was added to water and stirred until complete homogenous solution was obtained
b) Sample was heated up to 95°C and kept at this temperature for approximately 5 min
c) 10% wt salt of the salt mixture (about half of the total NaCl+KCl) was added and stirred until completely dissolved
d) Remaining salt (NaCl+KCl) and savoury mix were mixed together and added to the mixture from step c) while stirring
e) Mixture from step d) was acidified with HCl 1N to obtain a pH < 3
f) Sample was allowed to cool to RT to solidify

| | **(%wt)** |
|---|---|
| Pectin powder, LC810, Danisco | 3.0 |
| Water | 71.5 |
| Salt (10% NaCl + 8% KCl) | 18 |
| taste enhancer and taste imparting components | 4.5 |
| HCl 1N | 3.1 |
| Total | 100 |
| pH | <2.9 |

*LC 810 (Danisco average DE typically 37, contains gelling pectin), contains* ∼*62% galacturonic acid* (*GalA*). Savoury mix contains sugar, yeast extract, meat powder base, parsley, pepper, flavours.
- Product was a gel at room T
- pH was 2.85, Firmness 33g and aw 0.82

### Example 6

A shape-stable calcium-fortified gel according to the invention was prepared according to the description of Example 1.

| | %wt |
|---|---|
| Pectin powder LC 810, Danisco | 1.6 |
| Water | 70.1 |
| NaCl | 26.8 |
| CaCl2.2H2O | 1.5 |
| Total | 100 |
| | |
| pH | 2.0 |
| Dissolution | within 1.5 min |
| Dispersion | within 1 min |

*LC 810 (Danisco average DE typically 37, contains gelling pectin), contains ∼62% galacturonic acid* (*GalA*).

### Results

- A shape stable gel was obtained
- The example illustrates that although calcium is not necessary to make the gel, it can be added in relatively high amounts without having a negative effect on the good dissolution and dispersion behavior as provided by the invention (dissolution within 1.5 minutes, dispersion within 1 minute).
- A pectin gel with a pH > 3.5 and with a similar amount of calcium and similar firmness showed a dissolution time in the order of > 6 min.

### Example 7

A shape-stable calcium- and magnesium-fortified gel according to the invention was prepared according to the description of Example 1.

| | |
|---|---|
| Pectin powder LC 810, Danisco | 3.0% |
| Water | 74.4% |
| NaCl | 16.6% |
| KCl | 7.2% |
| CaSO4 | 0.3% |
| MgSO4 | 0.5% |
| Total | 100 |
| | |
| pH | 2.4 |
| Firmness (g) | 139±8 |

*LC 810 (Danisco average DE typically 37, contains gelling pectin), contains ∼62% galacturonic acid* (*GalA*).
- A shape stable gel with good firmness was obtained. The gel shows a fast dispersion, Although calcium is not necessary to make the gel, good dissolution and dispersion behavior is not affected by the presence of calcium and magnesium, in contrast to pectin gels with a pH >3.5 wherein calcium is needed for gel formation.

## Claims

1. Packaged food concentrate in the form of a gel, comprising
• water,
• sodium salt and optionally potassium salt in a total amount of from 5 wt% to 40 wt%, based on the total water content, wherein salt is calculated as (weight of salt/(weight of salt+weight of total water content))*100%,
• gelling pectin, being all pectin with a degree of esterification of below 55, wherein gelling pectin is dissolved in the water,
wherein the food concentrate has a pH of lower than 3.5.

2. Packaged food concentrate according to claim 1, wherein water is present in a total amount of from 35 to 90 wt%.

3. Packaged food concentrate according to any one of the preceding claims wherein the amount of gelling pectin dissolved in the water of the food concentrate is of between 0.7 wt% and 10 wt%, based on the total water content and calculated as ((weight of galacturonic acid)/(weight of galacturonic acid + weight of total water content))*100%.

4. Packaged food concentrate according to any one of the preceding claims wherein the food concentrate has an elastic modulus determined as defined in the description of higher than 5 Pa, preferably higher than 10 Pa, more preferably higher than 20 Pa, most preferably higher than 30 Pa and preferably lower than 9000 Pa, more preferably lower than 5000 Pa, even more preferably lower than 3000 Pa, even more preferably lower than 2000 Pa, most preferably lower than 1000 Pa..

5. Packaged food concentrate according to any one of the preceding claims wherein the food concentrate has a firmness of higher than 10 g preferably higher than 15 g, more preferably higher than 20 g, most preferably higher than 30 g and preferably less than 1000 g, more preferably less than 700 g, even more preferably less than 500 g.

6. Packaged food concentrate according to any one of the preceding claims wherein the ratio of the elastic modulus G' to the viscous modulus G" of the food concentrate is higher than 1, preferably higher than 3.

7. Packaged food concentrate according to any one of the preceding claims, wherein the food concentrate has a pH of higher than 1 and lower than 3.5, preferably of between 2 and 3.

8. Packaged food concentrate according to any one of the preceding claims, wherein the concentrate is a food concentrate for preparing a bouillon, soup, sauce, gravy or seasoned dish.

9. Packaged food concentrate according to any one of the preceding claims, wherein the food concentrate comprises
a. 40 to 80 wt% water;
b. 7 wt% to 35 wt% NaCl based on the total water content, wherein salt is calculated as (weight of salt/(weight of salt+weight of total water context))*100%;
c. 0.7 to 10 wt% of gelling pectin, based on the total water content and calculated as ((weight of galacturonic acid)/(weight of galacturonic acid + weight of total water content))*100%;
d. and wherein the food concentrate further comprises at least one of the group consisting of monosodium glutamate, 5'-ribonucleotides, organic acid, and mixtures thereof.

10. Packaged food concentrate according to any one of the preceding claims, wherein the food concentrate further comprises yeast extract, hydrolysed proteins of vegetable-, soy-, fish-, or meat-origin, particles of meat, particles of fish, particles of crustaceans, particles of plant, particles of fungi, flavours, extracts or concentrates from one or more of meat, fish, crustaceans, herbs, fruit, vegetable, and mixtures thereof.

11. Packaged food concentrate according to any one of the preceding claims, wherein 25 gram of the food concentrate disperses in water of 95°C within 2 minutes, preferably within 1 minute, more preferably within 30 seconds.

12. Process to prepare a packaged food concentrate in the form of a gel according to any one of the preceding claims, the process comprising the steps of :
a) Providing a mixture comprising water and gelling pectin, being all pectin with a degree of esterification of below 55, wherein the gelling pectin is dissolvable in water,
b) Heating the mixture,
c) Adding sodium salt,
d) Adjusting the pH of the mixture to a pH of below 3.5, if needed,
e) Transferring the mixture to a packaging,
f) Allowing the mixture to solidify,
to result in a packaged food concentrate in the form of a gel.

13. Process according to claim 12, wherein the sodium salt is added after heating step b).

14. Use of the food concentrate according to anyone of the claims 1 to 11 for preparing a bouillon, a soup, sauce, a gravy or a seasoned dish.

## Patentansprüche

1. Verpacktes Lebensmittelkonzentrat in Form eines Gels, umfassend
• Wasser,
• Natriumsalz und gegebenenfalls Kaliumsalz in einer Gesamtmenge von 5 Gew.-% bis 40 Gew.-%, bezogen auf den gesamten Wasseranteil, wobei das Salz berechnet wird als (Salzgewicht/(Salzgewicht + Gesamtgewicht des Wassers))*100%,
• gelbildendes Pectin, bei dem es sich durchweg um Pectin mit einem Veresterungsgrad von weniger als 55 handelt, wobei das gelbildende Pectin in Wasser gelöst ist,
wobei das Lebensmittelkonzentrat einen pH-Wert von weniger als 3,5 aufweist.

2. Verpacktes Lebensmittelkonzentrat nach Anspruch 1, wobei Wasser in einer Gesamtmenge von 35 bis 90 Gew.-% vorliegt.

3. Verpacktes Lebensmittelkonzentrat nach einem der vorstehenden Ansprüche, wobei die Menge des gelbildenden Pectins, das im Wasser des Lebensmittelkonzentrats gelöst ist, 0,7 bis 10 Gew.-% beträgt, bezogen auf den gesamten Wassergehalt und berechnet als ((Gewicht von Galacturonsäure)/(Gewicht von Galacturonsäure + Gewicht des gesamten Wassergehalts))*100%.

4. Verpacktes Lebensmittelkonzentrat nach einem der vorstehenden Ansprüche, wobei das Lebensmittelkonzentrat einen gemäß den Angaben in der Beschreibung bestimmten Elastizitätsmodul von mehr als 5 Pa, vorzugsweise von mehr als 10 Pa, insbesondere von mehr als 20 Pa und am meisten bevorzugt von mehr als 30 Pa und vorzugsweise von weniger als 9000 Pa, insbesondere von weniger als 5000 Pa, besonders bevorzugt von weniger als 3000 Pa, noch mehr bevorzugt von weniger als 2000 Pa und am meisten bevorzugt von weniger als 1000 Pa aufweist.

5. Verpacktes Lebensmittelkonzentrat nach einem der vorstehenden Ansprüche, wobei das Lebensmittelkonzentrat eine Festigkeit von mehr als 10 g, vorzugsweise von mehr als 15 g, insbesondere von mehr als 20 g und am meisten bevorzugt von mehr als 30 g und vorzugsweise von weniger als 1000 g, insbesondere von weniger als 700 g und am meisten bevorzugt von weniger als 500 g aufweist.

6. Verpacktes Lebensmittelkonzentrat nach einem der vorstehenden Ansprüche, wobei das Verhältnis des Elastizitätsmoduls G' zum Viskositätsmodul G" des Lebensmittelkonzentrats mehr als 1 und vorzugsweise mehr als 3 beträgt.

7. Verpacktes Lebensmittelkonzentrat nach einem der vorstehenden Ansprüche, wobei das Lebensmittelkonzentrat einen pH-Wert von mehr als 1 und von weniger als 3,5 und vorzugsweise von 2 bis 3 aufweist.

8. Verpacktes Lebensmittelkonzentrat nach einem der vorstehenden Ansprüche, wobei es sich beim Konzentrat um ein Lebensmittelkonzentrat zur Herstellung einer Bouillon, einer Suppe, einer Soße, einer Bratensoße oder eines gewürzten Gerichts handelt.

9. Verpacktes Lebensmittelkonzentrat nach einem der vorstehenden Ansprüche, wobei das Lebensmittelkonzentrat Folgendes umfasst:
a. 40 bis 80 Gew.-% Wasser;
b. 7 Gew.-% bis 35 Gew.-% NaCl, bezogen auf den gesamten Wassergehalt, wobei das Salz berechnet wird als (Gewicht des Salzes/(Gewicht des Salzes + Gewicht des gesamten Wassergehalts))*100%;
c. 0,7 bis 10 Gew.-% gelbildendes Pectin, bezogen auf den gesamten Wassergehalt und berechnet als ((Gewicht von Galacturonsäure)/(Gewicht von Galacturonsäure + Gewicht des gesamten Wassergehalts))*100%;
d. und wobei das Lebensmittelkonzentrat ferner mindestens einen Bestandteil aus der Gruppe, die aus Mononatriumglutamat, 5'-Ribonucleotiden, organischen Säuren und Gemischen davon besteht, umfasst.

10. Verpacktes Lebensmittelkonzentrat nach einem der vorstehenden Ansprüche, wobei das Lebensmittelkonzentrat ferner Folgendes umfasst: Hefeextrakt, hydrolysierte Proteine, die aus Gemüse, Soja, Fisch oder Fleisch stammen, Teilchen von Fleisch, Teilchen von Fisch, Teilchen von Krustentieren, Teilchen von Pflanzen, Teilchen von Pilzen, Aromastoffe, Extrakte oder Konzentrate von einem oder mehreren der Bestandteile, Fleisch, Fisch, Krustentiere, Kräuter, Obst, Gemüse und Gemische davon.

11. Verpacktes Lebensmittelkonzentrat nach einem der vorstehenden Ansprüche, wobei 25 Gramm des Lebensmittelkonzentrats innerhalb von 2 Minuten in Wasser von 95°C dispergiert werden, vorzugsweise innerhalb von 1 Minute und insbesondere innerhalb von 30 Sekunden.

12. Verfahren zur Herstellung eines verpackten Nahrungsmittelkonzentrats in Form eines Gels nach einem der vorstehenden Ansprüche, wobei das Verfahren die folgenden Stufen umfasst:
a) Bereitstellen eines Gemisches, das Wasser und gelbildendes Pectin umfasst, wobei das Pectin durchweg einen Veresterungsgrad von weniger als 55 aufweist, wobei das gelbildende Pectin in Wasser auflösbar ist,
b) Erwärmen des Gemisches,
c) Zugeben von Natriumsalz,
d) Einstellen des pH-Wertes des Gemisches auf einen Wert unter 3,5, sofern erforderlich,
e) Übertragen des Gemisches in eine Verpackung und
f) Erstarrenlassen des Gemisches, wodurch man ein verpacktes Nahrungsmittelkonzentrat in Form eines Gels erhält.

13. Verfahren nach Anspruch 12, wobei das Natriumsalz im Anschluss an die Erwärmungsstufe b) zugesetzt wird.

14. Verwendung des Lebensmittelkonzentrats nach einem der Ansprüche 1 bis 11 zur Herstellung einer Bouillon, einer Suppe, einer Soße, einer Bratensoße oder eines gewürzten Gerichts.

## Revendications

1. Concentré alimentaire emballé dans la forme d'un gel, comprenant
• de l'eau,
• un sel de sodium et éventuellement un sel de potassium dans une quantité totale de 5 % en mase à 40 % en masse, rapporté au contenu total d'eau, dans lequel le sel est calculé comme (masse de sel/(masse de sel + masse de contenu total d'eau)) * 100 %,
• de la pectine gélifiante, étant toute pectine avec un degré d'estérification inférieur à 55, où la pectine gélifiante est dissoute dans de l'eau,
dans lequel le concentré alimentaire présente un pH inférieur à 3,5.

2. Concentré alimentaire emballé selon la revendication 1, dans lequel l'eau est présente dans une quantité totale de 35 à 90 % en masse.

3. Concentré alimentaire emballé selon l'une quelconque des revendications précédentes, dans lequel la quantité de pectine gélifiante dissoute dans l'eau du concentré alimentaire est de 0,7 % en masse à 10 % en masse, rapportée au contenu total d'eau et calculée comme ((masse d'acide galacturonique)/(masse d'acide galacturonique + masse de contenu total d'eau)) * 100 %.

4. Concentré alimentaire emballé selon l'une quelconque des revendications précédentes, dans lequel le concentré alimentaire présente un module élastique déterminé comme défini dans la description supérieur à 5 Pa, de préférence supérieur à 10 Pa, encore mieux supérieur à 20 Pa, bien mieux encore supérieur à 30 Pa et de préférence inférieur à 9 000 Pa, encore mieux inférieur à 5 000 Pa, bien mieux encore inférieur à 30 000 Pa, particulièrement de préférence inférieur à 2 000 Pa, particulièrement encore mieux inférieur à 1 000 Pa.

5. Concentré alimentaire emballé selon l'une quelconque des revendications précédentes, dans lequel le concentré alimentaire présente une fermeté supérieure à 10 g, de préférence supérieure à 15 g, encore mieux supérieure à 20 g, bien mieux encore supérieure à 30 g et de préférence inférieure à 1 000 g, encore mieux inférieure à 700 g, bien mieux encore inférieure à 500 g.

6. Concentré alimentaire emballé selon l'une quelconque des revendications précédentes, dans lequel le rapport du module élastique G' au module visqueux G" du concentré alimentaire est supérieur à 1, de préférence supérieur à 3.

7. Concentré alimentaire emballé selon l'une quelconque des revendications précédentes, dans lequel le concentré alimentaire présente un pH supérieur à 1 et inférieur à 3,5, de préférence de 2 à 3.

8. Concentré alimentaire emballé selon l'une quelconque des revendications précédentes, dans lequel le concentré est un concentré alimentaire pour préparer un bouillon, une soupe, une sauce, un jus de viande ou un plat assaisonné.

9. Concentré alimentaire emballé selon l'une quelconque des revendications précédentes, dans lequel le concentré alimentaire comprend
a. de 40 à 80 % en masse d'eau ;
b. de 7 % en masse à 35 % en masse de NaCl, rapporté au contenu total d'eau, où le sel est calculé comme (masse de sel/(masse de sel + masse de contenu total d'eau)) * 100 % ;
c. de 0,7 à 10 % en masse de pectine gélifiante, rapporté au contenu total d'eau et calculé comme ((masse d'acide galacturonique)/(masse d'acide galacturonique + masse de contenu total d'eau)) * 100 % ;
d. et dans lequel le concentré alimentaire comprend de plus au moins un du groupe constitué de glutamate de monosodium, 5'-ribonucléotides, acide organique, et mélanges de ceux-ci.

10. Concentré alimentaire emballé selon l'une quelconque des revendications précédentes, dans lequel le concentré alimentaire comprend de plus un extrait de levure, des protéines hydrolysées de particules d'origine végétale, de soja, de poisson, ou de viande, des particules de viande, des particules de poisson, des particules de crustacés, des particules de plantes, des particules de champignons, des arômes, des extraits ou des concentrés d'un ou plusieurs parmi la viande, le poisson, les crustacées, les herbes, les fruits, les légumes, et des mélanges de ceux-ci.

11. Concentré alimentaire emballé selon l'une quelconque des revendications précédentes, dans lequel 25 g du concentré alimentaire se dispersent dans de l'eau à 95 °C en 2 minutes, de préférence en 1 minute, encore mieux en 30 secondes.

12. Procédé de préparation d'un concentré alimentaire emballé dans la forme d'un gel selon l'une quelconque des revendications précédentes, le procédé comprenant les étapes :
a) de fourniture d'un mélange comprenant de l'eau et de la pectine gélifiante, étant toute pectine avec un degré d'estérification inférieur à 55, où la pectine gélifiante peut être dissoute dans de l'eau,
b) de chauffage du mélange,
c) d'addition de sel de sodium,
d) d'ajustement du pH du mélange à un pH inférieur à 3,5, si nécessaire,
e) de transfert du mélange dans un emballage,
f) de laisser le mélange se solidifier, pour résulter en un concentré alimentaire emballé dans la forme d'un gel.

13. Procédé selon la revendication 12, dans lequel le sel de sodium est ajouté après l'étape de chauffage b).

14. Utilisation du concentré alimentaire selon l'une quelconque des revendications 1 à 11 pour préparer un bouillon, une soupe, une sauce, un jus de viande ou un plat assaisonné.
